# EUROPEAN PATENT APPLICATION

(11) **EP 2 402 590 A1**
(43) Date of publication of application: **04.01.2012**
(21) Application number: 09840678.8
(22) Date of filing: 27.02.2009
(51) Int. Cl.: F03D 1/00

(54) **THREE-BLADED WIND TURBINE DEVICE FOR SMALL SPACES**

(71) Applicant: Eolincyl, S.L., 47001 Valladolid (ES)
(72) Inventor: NISTAL RUIZ , Santiago, E-47001 Valadolid (ES); RUIZ ORCAJO, Jorge Teodoro, E-47001 Valadolid (ES)
(74) Representative: PROPI, S.L.
(86) International application number: PCT/ES2009/000103
(87) International publication number: WO 2010/097482

(57) **Abstract**

Three-bladed wind turbine device consisting of a synchronous generator (10) with multipole permanent magnets, which allows a two-stage multiplier (6) to be connected to an output shaft (4) disposed on two bearings and this in turn connected to a hub (3); with a hydraulic brake (8); wherein a hydraulic unit (14) controls the variable-pitch blade system (7) and the system for orientating the nacelle (16), which nacelle includes a ring gear (17) that joins the nacelle to the tower (18); and a control system with software disposed inside a control box (13) so that in order for the variable frequency power transmitted by the generator (10) to be transformed it first passes through a power converter and is transformed in order to be loaded to the grid, wherein said generator can be positioned close to points of consumption, industrial estates, etc. due to the small size thereof.

## Description

### Object of the invention

The present invention relates to a three-bladed wind turbine device wherein the internal arrangement of its parts and the novel design of its blades are such that make the system to save a lot of space compared with the existing wind turbines, achieving to increase the capacity of any wind farm and allowing it to be used near points of consumption.

### Background of the invention

A wind turbine is an electric generator driven by a wind turbine powered by wind. Wind power is actually kinetic energy of moving air that provides mechanical power to a propeller which through a mechanical transmission system makes the rotor of a generator to rotate converting rotational mechanical energy into electrical energy.

There are different types of wind turbines, depending on their power, the arrangement of its axis of rotation, the type of generator, and so on. The most common are the axis of rotation parallel to the ground, because are the most efficient and capable to be adapted to different powers. Its main components are the rotor (high stiffness blades), gear box or multiplier (which may be carried on or not), generator, tower and control system responsible for the proper operation. All horizontal axis wind turbines have their main axis of rotation at the top of the tower. In general, the propeller is located such that the wind finds it before the tower, thus reducing the additional burden generated by the turbulence of the tower in case the rotor is located behind the tower.

### Description of the invention

The wind turbine of the present invention consists of a structure such that it allows generating energy very close to the points of consumption, as its internal distribution allows in a small space to capture energy from the wind with a three-bladed rotor and to be processed for extracting the maximum energy available, this is: the arrangement of elements within its internal structure and combined with the three-bladed rotor design allows a compact assembly which can be placed near the points of consumption, industrial estates, distribution grids, etc., causing a reduced environmental impact. Moreover it allows providing energy in areas far away from of the electrical transportation grid, and it may be combined with other renewable energy systems, it can also operate with moderate winds.

The wind turbine of the present invention comprises a low power wind turbine, with the latest generation technology, bringing all the benefits of recent technological advances in wind energy.

This is a three-bladed wind turbine device with upwind orientation, variable speed, based on a synchronous generator (10) of multipole permanent magnets that allows connection of the aerodynamic rotor (20) from a very simple two-stage gear multiplier (6). It has a system (16) for orientating the nacelle (19) and a variable-pitch blade system (7) controlled by hydraulic actuators.

It is based on a robust architecture of next-generation industrial PLC equipped with the adequate communications systems in order to allow a remote monitoring of the machine. The energy generated at variable frequency, is fully conditioned through a converter to be injected into the grid depending on the requirements needed by the grid for generating reactive power and is ready to support micro cuts and drops of the grid.

The structure of the nacelle (19) is supported by a tubular tower (18) made of steel mainly with cross-section and variable thickness, surface treated in order to prevent corrosion.

The blades (1) are the main element of the aerodynamic rotor (20) and of the wind turbine itself, having a direct impact on the performance of it. Each blade (1) consists of two overlapping shells of fiberglass reinforced therein by different low-density structural materials. The aerodynamic profile, specifically defined for being assembled with the tower (18) has been designed to capture the maximum wind power generating minimal noise levels. At the base of the blade (1) is located a steel flange wherein the T screws are placed for being fixed to the hub (3). Inside of each blade (1) is an aluminum conductor with the goal of driving all the energy to ground through the structure of the tower structure (18), in the case of direct impact from a lightning.

The aerodynamic rotor (20) is responsible for capturing the maximum energy from the wind and passing it through the shaft (4) to the generator (10) passing through the stage of multiplication. It includes three blades (1) arranged at 120°. The blades (1) are attached to the hub (3) through self-lubricating ball bearings that allow the rotation of the blades (1) for a variable pitch control. The hub (3) is a mechano-welded structure made of alloyed steel shaped as an irregular hexagon with equal sides two to two and a hole outside the nacelle (19) that allows accessing the rod mechanisms of the control system. The outside of the nacelle (19) is protected by a fiber casing, protected with paint resistant to UV rays. Attached to the hub (3), by means of high-strength screws is the output shaft (4).

The shaft (4) is a piece made of forged alloy steel, machined and surface treated, supported on two bearings (5). In its most robust end the hub (3) is attached, and in the smaller diameter, through an elastic coupling to the multiplier (6).

The rotor assembly (20), coupled to the multiplier (6) and generator (10), is supported on a bench (15) plane of which forms an angle of 4° with the plane of the base of the tower (18).

The control system of the blade (7) pitch allows modifying the attach angle of the blades (1), increasing the range of wind speeds wherein the wind turbine is able to generate the maximum power.

Each of the blades (1) is anchored to a crown (2) attached to the hub (3), which allows the rotation of these without frictional effects. In turn, the three blades (1) are joined by a crank system that ensures their synchronized movement depending on the position of a single hydraulic servocilynder. The transmission of motion from the cylinder rod to the crank system is performed by a rod located inside the nacelle (19). The system includes a set of intelligent valves and precision sensors that allow the PLC to control both the position and speed of movement of the assembly ensuring a dynamic response fast enough as to respond to the complex control algorithm that determines the position of the blades (1) at every moment. In the case of an unforeseen defective the hydraulic system has a battery, properly dimensioned to allow the return of the blades (1) to their feathered position, allowing the wind to pass through them and performing a braking effect on the rotor (20) of the machine. The algorithm is generated from the main controller based on the variations in the rotation speed of the aerodynamic shaft (4) using a variable gain PID system as main control strategy.

The brake system of the aerodynamic train is based on the modification of the blade pitch (1). By locating these with an adequate orientation the impact of the wind thereon not only stops the generation of a rotary torque to the shaft (4), but is opposed thereto. Although this is the usual way to stop the wind turbine in normal operation conditions, there is a second safety brake that secures the anchor of the shaft (4) for the maintenance functions and acts as a safety brake in the event when some severe abnormality occurs on the computer.

The hydraulic brake (8) consists of a disc located on the high side of the multiplier (6) and consists of a brake caliper and a disc. It is equipped with a sensor that tells us the stall condition thereof in order to avoid starting the machine with the brake on.

In order to perform the power generation at higher rotation speed, it is needed to attach a multiplier (6) between the generator (10) and the shaft (4). The multiplier (6) is simple in terms of gears, with two stages in parallel. The set is encased in a steel casing with two side flaps through which the clamping to the bench (15) is performed through buffers adequate to the characteristic vibrations of the machine. The gears are lubricated with oil, stored in a tank equipped with temperature and level sensors. Due to the multipole synchronous generator (10) the synchronous speed is 350 rpm compared to 1500 or 3000 rpm of asynchronous generators, which significantly reduces the wear on the multiplier (6). The simplicity of the mechanical assembly attached to the reduced rotation speed in the global range, makes unnecessary the existence of a cooling systems thus significantly reducing the maintenance of the equipment.

The elastic couplings (9) absorb all the stresses caused by temporary deviations in the alignment of the shafts due to vibrations or stresses transmitted by the blades (1) to the shafts of the aerodynamic rotor (20).

The hydraulic unit (14) generates sufficient pressure to feed all the hydraulic actuators of the system that are mainly the top brake, the yaw brake and the actuator of the control system. The hydraulic ground (14) is equipped with two storage tanks of 20 liters and 1 liter that ensure the performance of critical elements in the case the system fails. The average pressure of the circuit is 200 bars and is generated from an oil pump driven by a 4kW motor. The system is monitored by a general pressure sensor, a temperature probe and a level detector in the main tank.

The orientation system (16) or yaw system allows the generator (10) to be positioned in the prevailing wind direction in order to capture, at all times, the maximum energy available from the wind. It consists of an externally ring gear (17) on which four electric gear motors of 0.37 kW are synchronously actuated. Fixed-speed motors are controlled by the controller depending on the wind measurements collected by the meteorological station (11) of the wind turbine. The ring gear (17) has the same diameter as the tower (18) and is anchored thereto by means of high-strength screws. The gear motors are anchored to a tubular section of the bench (15) through a ring structure welded thereto.

The nacelle (19) is located at the top of the tower (18) directly connected to the aerodynamic rotor (20). Its function is to support and protect all the elements located at the top of the wind turbine as the rotor (20), the multiplier (6), the couplings, the generator (10) or the control box (13). Essentially it consists of a bench (15) of structural features and an outer protective casing.

The bench (15) is a mechano-welded structure made from standardized structural elements capable of supporting all the mechanical requirements of the elements of the system, especially those generated by the rotation torque of the rotor (20) and the wind stresses. It is attached to the tower (18) through a ring gear (17) that allows the rotational movement with respect to it based on the four gear motors that make up the orientation system (16). In the center of the bench (15) is the access door for the maintenance operation of the elements located inside the nacelle (19).

At the rear part an auxiliary hoist (12) or crane for lifting light loads from the ground such as tool boxes or spare parts is welded in order to prevent the access of operators from the stairway from forcing them to bear the weight.

The nacelle (19) is covered by a fiberglass structure, protected by special paint resistant to sun lights. Said structure consists of a main base that covers the bottom of the bench (15) and two upper gates that cover the rest. The gates pivot on their sides, allowing opening the nacelle (19) at its top with the dual purpose of facilitating the mobility of the operators and accessing to heavy loads carried by a crane from the top of the nacelle (19) to the bench (15).

The interior has an auxiliary lighting system to allow a maintenance operation under low light conditions.

The wind turbine assembly is supported by a tubular tower (18) made of steel capable to absorb the forces transmitted by the wind effect to the aerodynamic rotor (20).

The tower (18) consists of three sections externally joined together by high strength screws. Although the section is mainly cylindrical, the last section has a slight taper that allows a better coupling to the orientation system (16). The flanges are welded at both ends on each section.

Each section of the tower (18) is surface treated to resist corrosion attacks. The sections are formed by curved panels joined by submerged arc welding and their height is lower than that of the standard transportations in the market greatly facilitating the logistical arrangements of the wind turbine.

Attached to the tower (18) is the staircase for accessing to the nacelle (19). On the stair is a safety rail that allows accessing to the tower (18) in a safe and reliably manner in accordance to the in-force regulation. At the end of the stair, a small platform allows the operator to move to the location of the small door located in the nacelle (19).

The tower (18) is supported by a section of reinforced concrete foundation capable of withstanding forces transmitted by the tower (18) and prevents it from overturning. The foundation is a square footing with a cylindrical area elevated in the center of the square also called pedestal. The depth and dimension of the footing depend on the physical properties of the land in which the wind is implemented.

The formwork of the footing can be made by metallic elements "Peris." First, a layer of lean concrete is poured. Then, on the lean concrete layer and prior to concreting the assembly, the metal collar is located, on which the tower structure (18) of the wind turbine is screwed. This piece is intended to allow the support of the unit for controlling the wind turbine and for the cables to exit from inside the tower (18). Finally, the reinforcement of the footing is placed and proceed to concreting, leaving tube passages that allow the passage of wires coming from inside the tower (18) once the assembly has been hardened. There should be given the utmost attention to the process of vibration during concrete pouring operation, since the homogeneity of the footing and matching its final strength will depend thereon. Once the concrete has cured, follows the stripping of the footing and the filling with a suitable material coming from the excavation to the final elevation from the ground and the formation of the wind turbine mounting platform.

The generator (10) is responsible for transforming the kinetic energy of the rotor (20) into electrical energy. This is a synchronous generator (10) with permanent magnets, whereby it does not require the excitation of the rotor (20) and the stress generated at variable frequency, which implies that the generator (10) is capable of producing very low wind speeds without having to boot the equipment such as the motor in order to reach a synchronous speed, as its generation curve starts from 0 rpm. On the other hand, it is necessary to convert all energy in order to adapt it to grid frequency through a complex power electronics. Although in the past this could be a problem, today the technology has evolved enough to change the situation, giving the machine a number of other added benefits such as the reactive power regulation, the resistance to voltage dips, etc.

The generator (10), of multipole concept with exiting poles, generates a nominal speed which enables the use of a very simple multiplication stage. The rotor assembly (20) and stator is protected by a metal casing having a structure with legs for its fixation to the bench (15). It is cooled by forced ventilation and includes temperature sensors in windings and bearings to monitor the heating equipment. An incremental encoder, working as a tachometer, monitors the speed of rotation of the shaft (4) to feedback the control loop that generates the resistive torque of the rotor (20). The union of the generator (10) with the multiplier (6) is made from a specific elastic coupling (9).

The power transmitted by the generator (10), due to its topology, is of variable frequency and therefore does not allow its use in a grid of regular use. In order to turn all the energy to the grid, it is necessary to convert it to values of frequency and voltage compatible with the connection point of the transformer. The power converter is not only able to adapt this power to a compatible format, but can further adapt to the needs of the grid in order to compensate certain imbalances caused by consumption.

The power transformation essentially takes place in four stages. The first three are performed by the power converter. First, the energy wave of variable frequency is corrected by converting the sine wave current. Once the correction has been performed, it is reversed to create a constant frequency signal similar to that required by the grid and finally filtered to remove any possible harmonics produced in the conversion process. This wave, which could be exploited as a regular point of consumption of an industrial grid is transformed into values of medium voltage using a high transformer for its dump in the distribution or transportation grid.

The converter is connected to the PLC via a field communication bus which ensures a synchronized actuation and a full access to diagnose from the main controller. Also it is connected to the safety chain to ensure the stop of the machine in case of an anomaly in the grid connection. With the option of remote monitoring, the converter is equipped with an Ethernet communication module.

The transformer basically depends on the grid connection point as, due to the low power of the equipment, we can dump the energy in high, medium or low voltage grids. Unlike most conventional wind turbines, the transformer is located in the transformation center and not inside the nacelle (19) which greatly facilitate its maintenance and accessibility.

The transformer is of silicone oil bath and is located in a prefabricated hut specially arranged for the installation of this type of transformers in compliance with the appropriate measures for a proper ventilation and including oil collection buckets in compliance with the UNESA 1303A recommendations.

The control system of the machine is a key element for the functioning of the equipment, since it manages all signals coming from the different subsystems acting accordingly with each of them. The objectives of the main control are:
- Smoothing the mechanical actions to mitigate to the maximum mechanical loads on structural elements.
- Ensuring the system robustness and reliability to all weather conditions.
- Collecting and treating external and internal signals for further optimizing the machine performance.
- Controlling the actuators based on external signals to optimize the capture of energy coming from the wind.
- Adapting the energy generated to the needs requested by the electrical grid changing the parameters, such as the power factor.
- Acting on electrical systems to support the characteristic phenomena of the electrical grid, such as voltage sags, harmonics, etc.
- Monitoring, diagnosing and acting before any possible system malfunction.

The control system consists of three main components. The main controller, based on API (Programmable Autonomous Industrial) or PLC architecture, is located at the base of the wind turbine. Inside of it is the main memory of the program in which the main control routine, responsible for coordinating all elements of the wind turbine and the specific control routines such as the control system or yaw, is housed. Through a field bus communication, the main controller communicates with a decentralized E/S device located in the nacelle (19) wherein all the signals from the sensors are centralized and the commands are distributed to the different actuators the nacelle (19).

The power converter equipped with an independent control, communicates with the PCL through a bus and based on the commands received by it, manages the conversion of energy coming from the generator (10) to adapt it to the main grid. On the other hand, the converter sends all measurements taken from the grid to the PLC, and in case of any abnormality it can actuate by sending an error message to the controller or directly on the security chain.

The vibration sensors include a basic predictive maintenance software, capable of informing the imbalances caused by wears in different parts of the machine.

The features of the controller include:
- Open and customizable system based on the requirements of each site.
- Locally and/or remotely simple monitoring system.
- It does not require the existence of an external control PC to function properly.
- The power electronics of the conversion system is backed by first-class manufacturers with several years of experience in the field of wind power and power conversion.

At the top of the nacelle (19), is a weather measurement station (11) composed of an anemometer torque and a redundant wind vane that generate information about the prevailing speed and direction of the wind, as well as a hygrometer that provides temperature and humidity readings.

The assembly is mounted on a flat metal support of about 500 mm from the roof of the nacelle (19). Each sensor is surrounded by an arc of metal approximately of 20 mm radius with the function of capturing the nearby lightning strikes and avoiding a direct impact on the sensors. Both anemometer and the wind vane are provided with heating resistances that prevent ice formation on the rolling elements which could impede the free movement of the sensors and hence their reliability in the measurement. The measurement of both sensors is proven in real-time readings provided by an ultrasonic sensor. At the base of the support is the hygrometer. Due to the influence of direct sunlight in the measurements of temperature and humidity it is protected by a set of discs resistant to UV rays. At the central upper part of the support, is a an air signaling beacon.

Signals coming from the station are connected to the decentralized E/S cabinet and sent to the PLC over the communication bus so that it can analyze them and send commands to the actuators based on the readings.

As for the security systems, the wind turbine includes three possible stops. The controlled stop in normal operation occurs when weather conditions are not suitable for wind turbine operation, such as for example, the absence of wind. The wind turbine stops in a controlled manner and waits for the conditions to be suitable for starting the operation. The stop is performed by changing the blades (1) to their feathered position.

The accelerated controlled stop occurs before the detection of a slight abnormality that may put the equipment at risk (excessive temperature in any equipment team, lack of pressure, speeding the rotor (20), abnormality in the electrical grid). Once the correct operating parameters have been recovered, the wind turbine will start automatically. The stop is performed by changing the blades (1) to their fathered position in an expedited manner.

In the emergency stop the wind turbine is equipped with a security system that actuates with independence from the controller, which ensures its stop in case of emergency. However, the controller can open the safety chain and unexpectedly stops the wind turbine before a severe anomaly. This stop is performed by changing the blades (1) to their fathered position in a much accelerated manner, the actuation of the motor brake and after a time, by the actuation of the hydraulic brake (8) of the aerodynamic train.

The safety chain is composed of two standardized security modules, a duplicated security chain being under an emergency stop in Category III.

The parameters monitored by the PLC that can activate any of the previous stop modes are mainly:
- PLC State
- Power Converter State
- Electrical Grid State
- Electrical protections in
   ○ The control cabinets
   ○ The converter
   ○ The High Transformer
   ○ The generator
- Speed limits for the rotor rotation
- Yaw Position Limits
- Vibration limits in the nacelle
- Hydraulic system state
- Mechanical brakes state
- Emergency Stop Mushrooms

As for the operation of the wind turbine, its main state are as follows:
- Initial or stop state. The generator (10) is completely stopped and isolated from the grid. The blades (1) are in a fathered position to prevent the wind from moving the rotor (20). All motors are inactive; no voltage on the switching elements and the safety chain remains open. This is the typical state in which the generator (10) is after a maintenance operation or in its start-up at the first time.
- Transitional state. Before going into normal operation, the following protocols for screening and opening protections must be followed, such as follows:

Initial Test. The turbine runs a check of all systems for its proper operation.

Grid connection. The wind turbine is connected to the electrical grid for evacuation, in order to allow the dump of the generated energy or feeding its systems through an auxiliary transformer.

Opening brakes. All mechanical retention systems of the wind turbine are unlocked in order to allow the movement of the blades (1), the rotor (20) and the orientation of the machine.
- Standby. The wind turbine remains active with the blades (1) in feathered position. Based on the measurements from the meteorological station (11), the nacelle (19) begins to be oriented to find the prevailing wind direction but the blades (1) do not begin to change their position until recording wind speeds over 2 m/s. The orientation system (16) remains active, but not the one with the blade pitch (7).
- State of production. At the moment of registering winds over 2 m/s, the wind turbine begins to change the position of the blades (1) and because the incidence of the wind, the rotor (20) starts rotating. The generator (10), which requires no excitement, begins to produce instant power controlled by the power converter. In this state, the orientation system (16) of the nacelle (19) and the blade pitch (7), which allow the optimization of the energy capture, remain active.

The generator (10) may need to stop due to reasons ranging from the very absence of wind to damages, passing through thunderstorms, damages in the grid connection or maintenance maneuvers. Depending on the urgency caused by the stop command, the system acts in three different ways:
Normal stop. The normal stop is caused by weather reasons or light anomalies, usually transient, which can lead the wind turbine to a dangerous state. This stop is produced with the wind turbine completely under control, without the need of actuating the mechanical locking elements and keeping the grid connection. In order to stop the movement, the blades (1) pass to feathered position letting the wind to pass through it and opposing to the movement of the rotor (20). This way of stop is what is known as aerodynamic brake. The stop reset is automatic, the equipment start working once the optimum operating conditions have been reached.

Rapid stop. The rapid stop is produced by a more aggressive anomaly than the previous ones or by the range output of some parameters of the wind turbine. This type of stop is similar to the previous one but it is rapidly performed printing a higher velocity to the movement of the blades (1) to their feathered position. Nor does it require the actuation of mechanical systems and the disconnection from the grid, and its reset is also automatic.

Emergency stop. It follows the opening of the security chain by actuating the security sensors connected thereto. When the opening occurs, the machine is disconnected from the electrical grid, the electrical circuits are opened and the actuators are de-energized, the blades (1) pass to their feathered position at high speed due to the actuation of the hydraulic accumulators and the mechanical brakes act breaking the rotor (20) by means of a pressure ramp. The events that allow the opening of this are related to the safety of operators and physical integrity of the machine. When the security chain acts, it is considered that the failure has been severe enough as to require human supervision for the system, whereby a manual reset is required.

Within the controller program, are two routines that are responsible for controlling and regulating the behavior of the systems for optimizing the energy capture in the machine, the orientation system (16) or Yaw system, which orients the position of the nacelle (19) to face it to the prevailing wind direction in order to capture the maximum energy, monitoring the possibility of a cable break by torque overstrain; and the pitch control system (7) of the blade (Pitch system), which is responsible to change the blade angle (1) decreasing the wind resistance of the machine and thus allowing the capture of power in winds with speeds above the nominal value.

The wind turbine device can present disconnection intervals before adverse weather conditions such as gusting winds higher than the values specified for its operation, formation conditions of abundant wind, high temperatures out of range or grid stability conditions out of range. Furthermore, it is protected against lightning strikes under the rules in force. The nominal power output can be reduced in order to ensure the integrity of some components, thus ensuring their operation in allowed temperature ranges combined with with strong winds, high temperatures, low density or low voltage.

The grounding system of the wind turbine device is an outer square ring buried at a suitable depth. This ring is connected to another circular interior integrated into the foundation and electro-welded to the armor. Finally, on the foundation is a ring attached to the previous ones. On both sides of the square rings two vertical spikes are welded.

### Description of the drawings

To complete the description being made and in order to help to a better understanding of the characteristics of the invention, according to a preferred example of the practical embodiment thereof, a set of drawings is attached as an integral part of said description in which, with an illustrative and not limitative manner, the following has been represented:

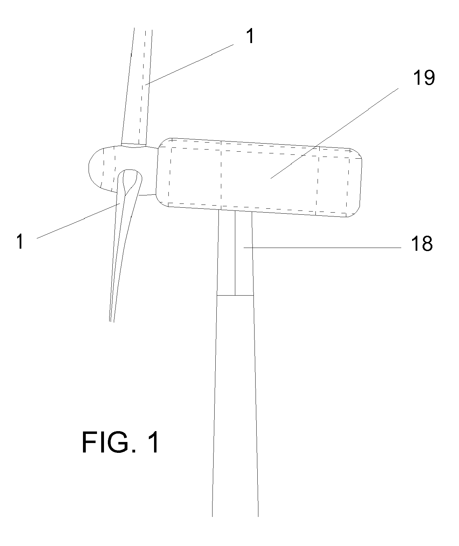

Figure 1 - This is an external view of the wind turbine side.

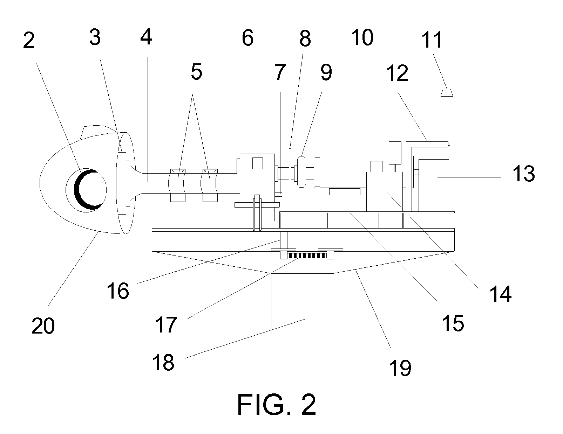

Figure 2 - This is a view of the internal arrangement of the elements making up the device.

## Claims

1. Three-bladed wind turbine device for small spaces, being of those of variable speed, with a tower (18) mostly cylindrical in section, consisting of three sections externally joined together by high strength screws, wherein the last section has a slight taper that allows a better coupling of nacelle (19), with said tower (18) being supported by a reinforced concrete foundation section, a stair for accessing to the nacelle (19) with a safety rail being attached to the tower (18), and wherein the nacelle ( 19) is located at the top of the tower (18) directly connected to the aerodynamic rotor (20), supporting and protecting all the elements located at the top, consisting of a structural bench (15) and a fiberglass protection casing, so that a main base covers the bottom of the bench (15) and two upper gates cover the rest, and comprising an auxiliary hoist (12) or crane in the back, and at the top of the nacelle (19) being weather measurement station (11), with an interior auxiliary lighting system, **characterized in that** its arrangement includes: a synchronous generator (10) with multipole permanent magnets, which allows a connection two-stage multiplier (6) to be connected to an output shaft (4) disposed on two bearings and this in turn connected to a hub (3); a hydraulic brake (8) based on the modification of the blade pitch control (1) located in the high side of the multiplier (6) with a sensor that reports the locking state thereof; a second safety brake that secures the anchorage of the shaft (4) for the maintenance functions and acts as a safety brake in case any severe abnormality occurs in the equipment, a hydraulic unit (14) that controls by hydraulic actuators the variable-pitch blade system (7) and the orientation system (16) of the nacelle (19), which has a ring gear (17) that connects the nacelle (19) to the tower (18); a control box (13), inside of which the software control system capable of managing all the signals coming from different subsystems is arranged, so that in order to transform the variable frequency energy transmitted by the generator (10), it passes through a power converter and then to a transformer in which the energy is transformed to be dumped to the distribution or transportation grid.

2. Three-bladed wind turbine device for small spaces according to claim 1, **characterized in that** each blade (1) consists of two overlapping shells of fiberglass reinforced therein by different low-density structural materials.

3. Three-bladed wind turbine device for small spaces according to claim 1, **characterized in that** the blades (1) are attached to the hub (3) through self-lubricating ball bearings that allow the rotation of the blades (1) for a variable pitch control.

4. Three-bladed wind turbine device for small spaces according to claim 1, **characterized in that** the fiberglass structure of the nacelle (19), is protected with paint resistant to UV rays.

5. Three-bladed wind turbine device for small spaces according to claim 1, **characterized in that** the rotor (20) assembly, coupled to the multiplier (6) and the generator (10), is supported on a bench (15) plane of which forms an angle of at most 4° with respect to the plane of the base of the tower (18).

6. Three-bladed wind turbine device for small spaces according to claim 1, **characterized in that** the blade pitch control (7) allows changing the angle of the blades (1), increasing the range of wind speeds wherein the wind turbine is able to generate the maximum power.

7. Three-bladed wind turbine device for small spaces according to claim 1, **characterized in that** the synchronous generator (10) has a synchronous speed of at least 350 rpm.

8. Three-bladed wind turbine device for small spaces according to claim 1, **characterized in that** the transformer is located outside the nacelle (19) and in the center of energy transformation.

9. Three-bladed wind turbine device for small spaces according to claim 1, **characterized in that** it is coupled to a multiplier (6) between the generator (10) and the shaft (4) in order to increase the rotation speed, with the assembly being embedded in a steel casing with two side flaps by which the clamping to the bench (15) is performed through buffers suitable for the characteristic vibrations of the machine.
